# FASCICULE DE BREVET EUROPEEN

(11) **EP 1 929 666 B1**
(45) Date de publication et mention de la délivrance du brevet: **04.03.2009**
(21) Numéro de dépôt: 06831222.2
(22) Date de dépôt: 22.09.2006
(51) Int. Cl.: H04B 7/185, H04B 7/02

(54) **TRANSMISSION SYNCHRONISEE PAR VOIES RADIO SATELLITAIRE ET TERRESTRE DE SOUS-GROUPES DE GROUPES DE DONNEES DESTINES A DES TERMINAUX DE COMMUNICATION RADIO**
SYNCHRONISIERTE ÜBERTRAGUNG MIT SATELLITEN- UND TERRESTRISCHEN FUNKKANÄLEN VON DATENUNTERGRUPPEN FÜR FUNKVERBINDUNGSGERÄTE
SYNCHRONISED TRANSMISSION BY MEANS OF SATELLITE AND TERRESTRIAL RADIO CHANNELS OF SUBGROUPS OF DATA GROUPS THAT ARE INTENDED FOR RADIO COMMUNICATION TERMINALS

(30) Priorité: 23.09.2005 FR 0552838
(43) Date de publication de la demande: 11.06.2008
(73) Titulaire: Alcatel Lucent, 75008 Paris (FR)
(72) Inventeur: COURSEILLE, Olivier, F-31320 Auzeville (FR)
(74) Mandataire: Hedarchet, Stéphane
(86) Numéro de dépôt international: PCT/FR2006/050934
(87) Numéro de publication internationale: WO 2007/034126

(56) Documents cités:
- US-A1- 2004 146 123

## Description

L'invention concerne les réseaux de communication comprenant au moins un satellite de communication et des stations terrestres de communication radio, et plus précisément la transmission de données par voie d'ondes à des terminaux de communication radio (fixes ou mobiles) situés dans les cellules terrestres de tels réseaux.

Certains réseaux de communication satellitaire comportent des stations de communication, également appelées répéteurs, chargées de transmettre par voie d'ondes, parallèlement aux satellites, des données destinées aux terminaux de communication radio qui sont situés dans les cellules radio qu'elles couvrent. Cela permet aux terminaux radio de recevoir les données qui leurs sont destinées, y compris lorsqu'ils sont situés dans une zone d'ombre d'un satellite.

Ce mécanisme de double transmission en parallèle, par voies satellitaire et terrestre, est notamment utilisé pour diffuser des programmes (ou contenus) de radio, de données, de multimédia, et bientôt de télévision. Il est appelé transmission hybride.

Lorsque la quantité de données à transmettre devient importante, par exemple dans le cas d'une diffusion de données représentatives d'images vidéo de haute qualité, les satellites ne peuvent pas assurer la transmission des données, à moins de réduire le nombre total de programmes à transmettre simultanément, du fait que leurs capacités de transmission sont limitées. Dans ce cas, si les données des programmes « supplémentaires » ne sont transmises que par la voie radio terrestre, les terminaux radio, qui sont situés dans la zone de couverture du satellite mais en dehors d'une cellule couverte par un répéteur, ne peuvent pas recevoir ces programmes.

Pour remédier à cet inconvénient, il a été proposé de transmettre une partie des données d'un programme par la voie satellitaire (voire également par la voie terrestre en cas de transmission hybride) et la partie complémentaire par la voie radio terrestre uniquement. Lorsque seule la première partie est reçue par le terminal radio, le signal restitué correspond à un premier niveau de qualité. Lorsque les deux parties sont simultanément reçues par le terminal radio, le signal restitué correspond à un niveau de qualité supérieur. Seuls les terminaux radio qui sont situés dans une zone effectivement couverte par le satellite et par un répéteur peuvent recevoir un programme avec une qualité supérieure. Ceux qui sont en dehors des cellules couvertes par les répéteurs ne peuvent recevoir que le premier niveau de qualité. La réception simultanée impose que les terminaux radio attendent d'avoir reçues les deux parties complémentaires, afin de les synchroniser, pour les combiner de façon appropriée avant qu'elles puissent être utilisées. L'inconvénient de cette solution réside dans le fait que les terminaux radio doivent disposer de deux récepteurs pour recevoir les parties complémentaires diffusées par les voies satellitaire et radio terrestre, ce qui augmente leur coût.

Aucune solution connue n'apportant une entière satisfaction, l'invention a donc pour but d'améliorer la situation.

Elle propose à cet effet un procédé de transmission de données pour un réseau de communication comportant au moins un satellite de communication et des stations terrestres de communication propres à transmettre par voie d'ondes des données en direction de terminaux de communication radio situés dans des cellules radio terrestres.

Ce procédé se caractérise par le fait qu'il consiste :
- à subdiviser des groupes de données à transmettre dans des cellules en premier et second sous-groupes,
- à constituer une première suite de premiers sous-groupes et une seconde suite de seconds sous-groupes, et
- à faire transmettre dans au moins une cellule destinataire, d'une part, la première suite par le satellite, et d'autre part, la seconde suite (voire également une partie au moins de la première suite en cas de transmission hybride) par chaque station associée à une cellule destinataire, en synchronisant leurs instants d'émission respectifs de sorte que chaque terminal situé dans une cellule destinataire puisse recevoir chaque premier sous-groupe d'un groupe de données qui lui est destiné pendant une période de temps différente de celle pendant laquelle il doit recevoir le second sous-groupe de ce même groupe.

Le procédé selon l'invention peut comporter d'autres caractéristiques qui peuvent être prises séparément ou en combinaison, et notamment :
- les instants d'émission peuvent être synchronisés de sorte que chaque terminal puisse recevoir les premier et second sous-groupes, d'un groupe de données qui lui est destiné, espacés d'un écart temporel choisi ;
- les première et seconde suites peuvent être transmises au moyen de première et seconde porteuses présentant des première et seconde fréquences différentes. Dans ce cas, chaque terminal en attente de premier et second sous-groupes, d'un groupe de données qui lui est destiné, cale son récepteur multifréquences sur la première fréquence afin de recevoir le premier sous-groupe, puis, après avoir reçu ce premier sous-groupe, cale son récepteur sur la seconde fréquence afin de recevoir le second sous-groupe ;
   ➢ le terminal peut caler son récepteur, d'une part, sur la première fréquence à un premier instant choisi et pendant une première durée choisie correspondant à l'intervalle de temps pendant lequel il doit recevoir le premier sous-groupe du réseau, et d'autre part, sur la seconde fréquence à un second instant, choisi égal au premier instant augmenté de l'écart temporel choisi, et pendant une seconde durée choisie correspondant à l'intervalle de temps pendant lequel il doit recevoir le second sous-groupe du réseau.

L'invention propose également un dispositif de contrôle pour une station de contrôle de transmission de données d'un réseau de communication comportant au moins un satellite de communication et des stations terrestres de communication propres à transmettre par voie d'ondes des données en direction de terminaux de communication radio situés dans des cellules radio terrestres.

Ce dispositif se caractérise par le fait qu'il comprend des moyens de contrôle chargés, lorsque des groupes de données doivent être transmis à des terminaux radio qui sont situés dans au moins une cellule dite destinataire :
- de subdiviser les groupes en premier et second sous-groupes,
- de constituer une première suite de premiers sous-groupes et une seconde suite de seconds sous-groupes,
- d'ordonner la transmission, d'une part, de la première suite par le satellite, et d'autre part, la seconde suite (voire également une partie au moins de la première suite en cas de transmission hybride) à chaque station (dite destinataire) associée à une cellule destinataire, et
- de synchroniser les instants d'émission respectifs du satellite et de chaque station destinataire de sorte que chacun des terminaux radio puisse recevoir chaque premier sous-groupe d'un groupe de données qui lui est destiné pendant une période de temps différente de celle où il reçoit le second sous-groupe de ce même groupe.

Le dispositif de contrôle selon l'invention peut comporter d'autres caractéristiques qui peuvent être prises séparément ou en combinaison, et notamment :
- ses moyens de contrôle peuvent être chargés de synchroniser les instants d'émission de sorte que chaque terminal destinataire puisse recevoir les premier et second sous-groupes, d'un groupe de données qui lui est destiné, espacés d'un écart temporel choisi ;
- ses moyens de contrôle peuvent être chargés d'ordonner la transmission des première et seconde suites au moyen de première et seconde porteuses de fréquences différentes.

L'invention propose également une station de contrôle de transmission de données, pour un réseau de communication comportant au moins un satellite de communication et des stations terrestres de communication propres à transmettre par voie d'ondes des données en direction de terminaux de communication radio situés dans des cellules radio terrestres du réseau, équipée d'un dispositif de contrôle du type de celui présenté ci-avant.

L'invention propose également un récepteur radio multifréquences pour un terminal de communication radio rattaché à un réseau de communication comportant au moins un satellite de communication et des stations terrestres de communication propres à transmettre par voie d'ondes des données au terminal lorsqu'il est situé dans une cellule radio terrestre du réseau.

Ce récepteur se caractérise par le fait, d'une part, qu'il peut recevoir et traiter des première et seconde porteuses présentant respectivement des première et seconde fréquences, et d'autre part, qu'il comprend des moyens de contrôle chargés, en cas d'attente de première et seconde porteuses comportant des premier et second sous-groupes d'un groupe de données qui lui est destiné, en provenance du satellite et de la station associée à la cellule dans laquelle il est situé, de caler sa fréquence de réception sur la première fréquence afin de recevoir la première porteuse comportant le premier sous-groupe, puis, après avoir reçu ce premier sous-groupe, de caler sa fréquence de réception sur la seconde fréquence afin de recevoir la seconde porteuse comprenant le second sous-groupe.

Les moyens de contrôle de ce récepteur peuvent être également chargés de caler sa fréquence de réception, d'une part, sur la première fréquence à un premier instant choisi et pendant une première durée choisie correspondant à l'intervalle de temps pendant lequel il doit recevoir le premier sous-groupe du réseau, et d'autre part, sur la seconde fréquence à un second instant, choisi égal au premier instant augmenté de l'écart temporel choisi, et pendant une seconde durée choisie correspondant à l'intervalle de temps pendant lequel il doit recevoir le second sous-groupe dudit réseau.

L'invention propose également un terminal de communication radio, pour un réseau de communication comportant au moins un satellite de communication et des stations terrestres de communication, équipé d'un récepteur radio multifréquences du type de celui présenté ci-avant.

D'autres caractéristiques et avantages de l'invention apparaîtront à l'examen de la description détaillée ci-après, et des dessins annexés, sur lesquels :

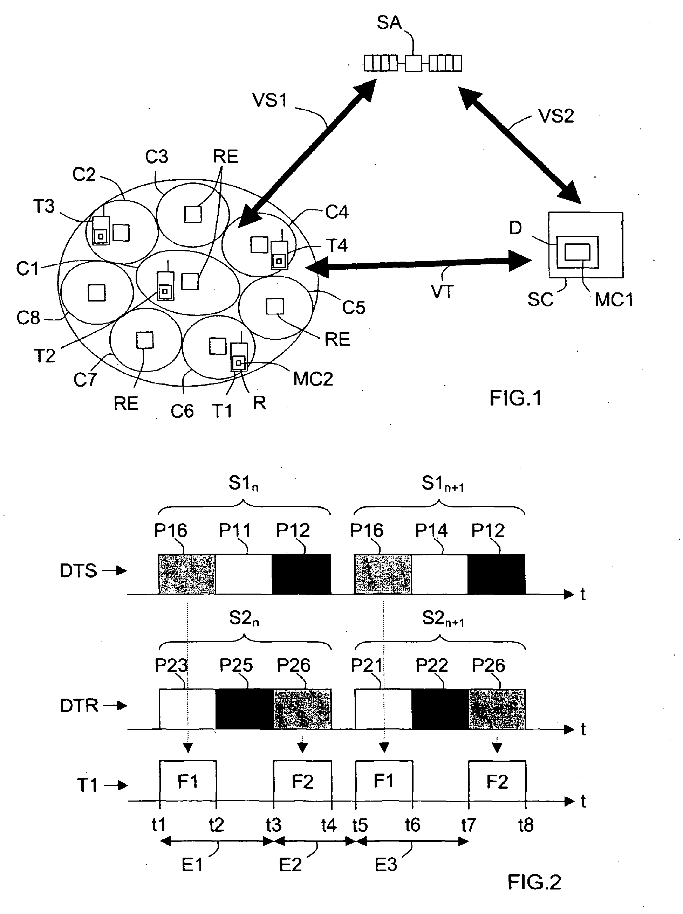

- la figure 1 illustre de façon très schématique une partie d'un réseau de communication satellitaire à répéteurs terrestres, comprenant une station de contrôle, équipée d'un exemple de réalisation d'un dispositif de contrôle selon l'invention, et des terminaux de communication radio équipés de récepteurs radio multifréquences selon l'invention, et
- la figure 2 illustre de façon schématique un exemple de diagramme temporel d'émission d'un satellite (DTS), un exemple de diagramme temporel d'émission des répéteurs terrestres d'une cellule (DTR), et le calage fréquentiel en fonction du temps d'un terminal T1, compte tenu des diagrammes d'émission du satellite et des répéteurs de cette cellule.

Les dessins annexés pourront non seulement servir à compléter l'invention, mais aussi contribuer à sa définition, le cas échéant.

L'invention a pour objet de permettre la réception par des terminaux de communication radio, fixes ou mobiles, situés dans des cellules radio terrestres d'un réseau de communication comportant au moins un satellite de communication et des stations terrestres de communication (ou répéteurs), de grandes quantités de données (constituant des groupes), comme par exemple des programmes de télévision ou des vidéos de haute qualité, ou encore des programmes radio multi-voies de haute qualité.

Dans ce qui suit, on considère à titre d'exemple non limitatif que les terminaux de communication radio (ci-après appelés « terminaux ») sont des téléphones mobiles. Mais, l'invention n'est pas limitée à ce type de terminal. Elle concerne en effet tous les types de terminaux pourvus d'un récepteur radio pouvant recevoir à la fois des données par voie satellitaire et par voie terrestre, et notamment les ordinateurs fixes ou portables, les récepteurs de télévision et/ou de vidéo (par exemple de type « Set-top Box »), les baladeurs audio ou vidéo, et les assistants numériques personnels (ou PDA).

Par ailleurs, l'invention concerne tout type de transmission radio, comme par exemple celle utilisant une technique dite « de multiplexage par répartition en fréquences orthogonales » (OFDM).

Le réseau illustré sur la figure 1, à titre d'exemple non limitatif, comprend un satellite de communication SA, dont le ou les faisceaux couvrent une zone de couverture ZC (voie satellitaire VS1), et des stations terrestres de communication (ou répéteurs) RE couvrant chacune une cellule radio Ci située à l'intérieur de la zone de couverture ZC (voie terrestre VT). Ici, le réseau comprend 8 cellules C1 à C8 (i = 1 à 8). Mais, l'indice i peut prendre n'importe quelle valeur supérieure ou égale à un (1).

Bien entendu, le réseau peut comporter un ou plusieurs satellites couvrant une ou plusieurs zones de couvertures différentes.

Il est important de noter que les cellules Ci peuvent être subdivisées en ensembles formant chacun un réseau à fréquence unique (SFN), c'est-à-dire transmettant toutes de façon synchronisée le même contenu à la même fréquence.

Des terminaux Tj, situés dans la zone de couverture ZC, sont équipés, selon l'invention, d'un récepteur radio RR de type multifréquences dont on comprendra l'utilité plus loin. On entend ici par « récepteur radio multifréquences » un récepteur comportant notamment un tuner et un démodulateur capables de fonctionner sur l'une ou l'autre d'au moins deux fréquences de porteuse différentes selon le calage fréquentiel choisi.

Dans l'exemple illustré sur la figure 1, quatre terminaux T1 à T4 (j = 1 à 4) ont été représentés. Mais, l'indice j peut prendre n'importe quelle valeur supérieure ou égale à un (1).

Les données, qui sont destinées aux terminaux Tj, proviennent d'une station de contrôle de transmission de données SC, également appelée passerelle satellitaire (ou « gateway »). Cette station de contrôle SC est agencée de manière à transmettre lesdites données au satellite SA sur une autre voie satellitaire VS2, au moyen d'une première porteuse modulée présentant une certaine fréquence (F3), et aux répéteurs RE, au moyen d'un système classique de transmission de type terrestre ou satellitaire. On notera que les porteuses transmises par la station de contrôle SC à destination du satellite SA font l'objet d'un changement de fréquence (F3 → F1) au niveau du satellite SA. Les terminaux Tj reçoivent donc les données du satellite SA dans une première porteuse présentant la première fréquence F1 et les données des répéteurs RE dans une seconde porteuse présentant la seconde fréquence F2.

On notera également que les données transmises aux répéteurs RE ne sont pas forcément identiques pour toutes les cellules Ci.

Plus précisément, la station de contrôle SC comprend un dispositif de contrôle D comportant un module de contrôle MC1 chargé, lorsque des groupes de données (volumineux et/ou de haute qualité) doivent être transmis à des terminaux Tj qui sont situés dans au moins une cellule Ci (dite destinataire) de la zone de couverture ZC, d'effectuer quatre opérations.

La première opération consiste à subdiviser les groupes de données à transmettre en premier P1i et second P2i sous-groupes complémentaires. Les premiers sous-groupes P1i sont destinés à l'ensemble des terminaux situés dans la zone de couverture ZC du satellite SA. Ils correspondent à un premier sous-ensemble des données à diffuser (comme par exemple un contenu vidéo ou audio de qualité inférieure, ou bien certains programmes d'un groupe de programmes). Les seconds sous-groupes P2i sont destinés aux terminaux Tj qui sont situés dans une ou plusieurs cellules Ci. Ils correspondent à un second sous-ensemble des données à diffuser, complémentaire du premier, permettant par exemple d'obtenir un contenu vidéo ou audio de qualité supérieure, ou bien d'autres programmes du groupe de programmes). Ces premier P1i et second P2i sous-groupes offrent ensemble l'intégralité des données diffusées (comme par exemple un contenu vidéo ou audio de qualité supérieure ou tous les programmes d'un groupe de programmes). Le volume de données du premier sous-groupe P1i, diffusé par satellite SA, est adapté à la capacité de transmission dudit satellite SA.

La deuxième opération consiste à constituer une première suite S1 de premiers sous-groupes P1i et une seconde suite S2 de seconds sous-groupes P2i à partir des premiers P1i et seconds P2i sous-groupes obtenus lors de la première opération. La seconde suite S2 n'est pas forcément la même pour toutes les cellules Ci.

La troisième opération consiste à ordonner à la station de contrôle SC de transmettre la première suite S1 au satellite SA et la seconde suite S2 à chaque répéteur RE (dit destinataire) associé à une cellule destinataire Ci. Dans le cas d'une transmission hybride, c'est-à-dire lorsque le contenu transmis par le satellite SA dans sa zone de couverture ZC est également transmis par les répéteurs RE dans les cellules Ci, la station de contrôle SC transmet également la première suite S1 aux répéteurs des cellules destinataires Ci.

La quatrième opération consiste à synchroniser pour chaque cellule Ci les instants d'émission respectifs du satellite SA et de chaque répéteur destinataire RE, afin que chaque terminal destinataire Tj, situé dans une cellule Ci, puisse recevoir chaque premier sous-groupe P1i d'un groupe de données qui lui est destiné pendant une période de temps différente de celle pendant laquelle il doit recevoir le second sous-groupe P2i de ce même groupe.

Un terminal Tj, destinataire d'un groupe de données subdivisé en premier P1i et second P2i sous-groupes, est averti par le réseau des modalités de transmission des sous-groupes par le satellite SA et par le répéteur RE de la cellule Ci dans laquelle il est situé.

Par conséquent, selon l'invention, chaque récepteur R, implanté dans un terminal Tj, comprend un module de contrôle MC2 chargé, chaque fois qu'il attend des première et seconde porteuses comportant des premier P1i et second P2j sous-groupes d'un groupe de données qui lui est destiné, de caler sa fréquence de réception sur la (première) fréquence F1 afin de recevoir la première porteuse comportant le premier sous-groupe P1i. Puis, une fois que le récepteur a reçu ce premier sous-groupe P1i, son module de contrôle MC2 cale sa fréquence de réception sur la (seconde) fréquence F2 afin de recevoir la seconde porteuse comprenant le second sous-groupe P2i.

Le récepteur R fonctionne ainsi dans un mode de type découpage temporel (ou « time slicing »).

Dans un mode de réalisation avantageux, le réseau peut fournir à chaque terminal Tj, destinataire d'un groupe de données subdivisé en premier P1i et second P2i sous-groupes, des informations temporelles telles que par exemple l'instant prévu du début (t1) de la réception du premier sous-groupe P1i, la (première) durée (ou intervalle de temps) prévu(e) de transmission (t2-t1) de ce premier sous-groupe P1i (ou l'instant prévu de fin de réception (t2) du premier sous-groupe P1i), l'instant prévu du début (t3) de la réception du second sous-groupe P2i (ou l'écart E1 entre t1 et t3), et la (seconde) durée (ou intervalle de temps) prévu(e) de transmission (t4-t3) de ce second sous-groupe P2i (ou l'instant prévu de fin de réception (t4) du second sous-groupe P2i).

Connaissant ces informations temporelles, le module de contrôle MC2 du récepteur R d'un terminal destinataire Tj peut caler sa fréquence de réception sur la première fréquence F1 à l'instant t1 (ou juste avant pour disposer d'une marge) et pendant la (première) durée t2-t1 (ou pendant une durée très légèrement supérieure pour disposer d'une marge). Puis, le module de contrôle MC2 interrompt le contrôle du calage et le reprend afin de caler la fréquence de réception sur la seconde fréquence F2 à l'instant t3 (ou juste avant pour disposer d'une marge) et pendant la (seconde) durée t4-t3 (ou pendant une durée très légèrement supérieure pour disposer d'une marge). Une fois cette durée t4-t3 écoulée le module de contrôle MC2 interrompt de nouveau le contrôle du calage.

Sur la figure 2 se trouvent représentés schématiquement, d'une première part, un exemple schématique de diagramme temporel d'émission DTS du satellite SA, d'une deuxième part, un exemple de diagramme temporel d'émission DTR des répéteurs destinataires RE de la cellule C6 (i=6), et d'une troisième part, le calage fréquentiel en fonction du temps (t) du terminal T1 qui est situé dans la cellule C6 (i=6), compte tenu des diagrammes d'émission DTS et DTR du satellite SA et des répéteurs destinataires RE de cette cellule C6.

Dans le cas d'une transmission hybride du contenu du satellite SA, on considère par simplification que la transmission terrestre associée a le même diagramme temporel d'émission DTS que celui du satellite SA. Mais cela n'est pas obligatoire.

Dans la description qui suit, on considère que le contenu transmis par les répéteurs RE des différentes cellules Ci est le même. Mais cela n'est pas obligatoire.

Plus précisément, dans cet exemple non limitatif, on considère :
- qu'une première suite S1ₙ, devant être transmise par le satellite SA (DTS), comprend trois premiers sous-groupes de données P16, P11 et P12 respectivement associés à des contenus Co6, Co1 et Co2, destinés à des terminaux situés dans tout ou partie de la zone de couverture ZC,
- qu'une autre première suite S1ₙ₊₁, devant être transmise par le satellite SA (DTS) après la première suite S1ₙ, comprend également trois premiers sous-groupes de données P16, P14 et P12 respectivement associés à des contenus Co6, Co4 et Co2, destinés à des terminaux situés dans tout ou partie de la zone de couverture ZC,
- qu'une seconde suite S2ₙ, devant être transmise (notamment) par le répéteur RE (DTR) de la cellule C6, comprend trois seconds sous-groupes de données P23, P25 et P26 respectivement associés à des contenus Co3, Co5 et Co6, et
- qu'une seconde suite S2ₙ₊₁, devant être transmise (notamment) par le répéteur RE (DTR) de la cellule C6 après la seconde suite S2ₙ, comprend trois seconds sous-groupes de données P21, P22 et P26 respectivement associés à des contenus Co1, Co2 et Co6.

Dans ce cas :
- le premier sous-groupe P16 de la première suite S1ₙ transmise par le satellite SA et le second sous-groupe P26 de la seconde suite S2ₙ transmise (notamment) par le répéteur RE de la cellule C6 sont issus de la subdivision d'un même groupe de données par le dispositif de contrôle D de la station de contrôle SC,
- le premier sous-groupe P11 de la première suite S1ₙ transmise par le satellite SA et le second sous-groupe P21 de la seconde suite S2ₙ₊₁ transmise notamment par le répéteur RE de la cellule C6 après la seconde suite S2ₙ sont issus de la subdivision d'un même groupe de données par le dispositif de contrôle D de la station de contrôle SC,
- le premier sous-groupe P12 de la première suite S1ₙ transmise par le satellite SA et le second sous-groupe P22 de la seconde suite S2ₙ₊₁ transmise notamment par le répéteur RE de la cellule C6 après la seconde suite S2ₙ sont issus de la subdivision d'un même groupe de données par le dispositif de contrôle D de la station de contrôle SC,
- le premier sous-groupe P16 de la première suite S1ₙ₊₁ transmise par le satellite SA après la première suite S1ₙ et le second sous-groupe P26 de la seconde suite S2ₙ₊₁ transmise (notamment) par le répéteur RE de la cellule C6 après la seconde suite S2ₙ sont issus de la subdivision d'un même groupe de données par le dispositif de contrôle D de la station de contrôle SC,
- le premier sous-groupe P14 de la première suite S1ₙ₊₁ transmise par le satellite SA est issu de la subdivision d'un groupe de données suivant, effectuée par le dispositif de contrôle D de la station de contrôle SC, le second sous-groupe P24 complémentaire devant faire partie d'une seconde suite (S2ₙ₊₂) non représentée devant être transmise (notamment) par le répéteur de la cellule C6 après la seconde suite S2ₙ₊₁,
- le premier sous-groupe P12 de la première suite S1ₙ₊₁ transmise par le satellite SA est issu de la subdivision d'un groupe de données suivant, effectuée par le dispositif de contrôle D de la station de contrôle SC, le second sous-groupe P22 complémentaire devant faire partie d'une seconde suite (S2ₙ₊₂ ou S2ₙ₊₃) non représentée devant être transmise (notamment) par le répéteur de la cellule C6 après la seconde suite S2ₙ₊₁,
- le second sous-groupe P23 de la seconde suite S2ₙ transmise (notamment) par le répéteur de la cellule C6 est issu de la subdivision d'un groupe de données précédant, effectuée par le dispositif de contrôle D de la station de contrôle SC, le premier sous-groupe P13 complémentaire faisait partie d'une première suite S1ₙ₋₁ non représentée antérieure à la première suite S1ₙ transmise par le satellite SA,
- le second sous-groupe P25 de la seconde suite S2ₙ transmise (notamment) par le répéteur de la cellule C6 est issu de la subdivision d'un groupe de données précédant, effectuée par le dispositif de contrôle D de la station de contrôle SC, le premier sous-groupe P15 complémentaire faisait partie d'une suite non représentée antérieure à la première suite S1ₙ transmise par le satellite SA.

Il est important de noter que le nombre de premiers sous-groupes P1i que comprend une suite n'est pas limité à trois. Il peut prendre n'importe quelle valeur supérieure ou égale à deux (2). De même, le nombre de seconds sous-groupes P2i que comprend une suite n'est pas limité à trois. Il peut prendre n'importe quelle valeur supérieure ou égale à deux (2). En outre, le nombre de premiers sous-groupes P1i que comprend une suite transmise par un satellite SA (ou par les répéteurs RE) n'est pas obligatoirement identique en permanence au nombre de seconds sous-groupes P2i que comprend une suite transmise par les répéteurs RE (ou par un satellite SA).

On considère maintenant que le terminal T1 (situé dans la cellule C6) désire recevoir le contenu Co6. Le module de contrôle MC2 du récepteur R du terminal T1 situé dans la cellule C6, dont le diagramme de calage fréquentiel en fonction du temps (t) est illustré dans la partie inférieure de la figure 2, cale la fréquence de réception sur la première fréquence F1 à l'instant t1 (ou juste avant pour disposer d'une marge) et pendant la (première) durée t2-t1 (ou pendant une durée très légèrement supérieure pour disposer d'une marge). Son récepteur R reçoit alors du satellite SA la première suite S1ₙ et en extrait le premier sous-groupe P16 du contenu Co6 qu'il veut recevoir. Puis, le module de contrôle MC2 interrompt le contrôle du calage à l'instant t2 (ou juste après pour disposer d'une marge) et le reprend à l'instant t3 (ou juste avant pour disposer d'une marge) afin de caler la fréquence de réception sur la seconde fréquence F2 et pendant la (seconde) durée t4-t3 (ou pendant une durée très légèrement supérieure pour disposer d'une marge). Son récepteur R reçoit alors du répéteur RE de la cellule C6 la seconde suite S2ₙ et en extrait le second sous-groupe P26 du contenu Co6 qu'il veut recevoir. Puis, le module de contrôle MC2 interrompt le contrôle du calage à l'instant t4 (ou juste après pour disposer d'une marge).

Afin de continuer à recevoir (si il le désire) la suite du contenu Co6, le récepteur du terminal T1 est averti par le réseau, ou bien au travers des informations reçues précédemment, de la transmission d'un autre groupe de données (et des informations temporelles correspondantes [t5, t6, t7, t8, E2=t5-t3, E3=t7-t5]). Son module de contrôle MC2 cale alors la fréquence de réception sur la première fréquence F1 à l'instant t5 (ou juste avant pour disposer d'une marge) et pendant la (première) durée t6-t5 (ou pendant une durée très légèrement supérieure pour disposer d'une marge). Son récepteur R reçoit alors du satellite SA la première suite S1ₙ₊₁ et en extrait le premier sous-groupe P16 qui lui est (notamment) destiné. Puis, le module de contrôle MC2 interrompt le contrôle du calage à l'instant t6 (ou juste après pour disposer d'une marge) et le reprend à l'instant t7 (ou juste avant pour disposer d'une marge) afin de caler la fréquence de réception sur la seconde fréquence F2 et pendant la (seconde) durée t8-t7 (ou pendant une durée très légèrement supérieure pour disposer d'une marge). Son récepteur R reçoit alors du répéteur RE de la cellule C6 la seconde suite S2ₙ₊₁ et en extrait le second sous-groupe P26 qui lui est (notamment) destiné. Puis, le module de contrôle MC2 interrompt le contrôle du calage à l'instant t8 (ou juste après pour disposer d'une marge).

La connaissance préalable des différents instants t1 à t7 peut permettre au terminal de mettre en veille entre les instants t2 et t3, t4 et t5, t6 et t7, certaines fonctionnalités liées à la réception, afin, par exemple, de réduire sa consommation électrique.

Le dispositif de contrôle D selon l'invention, et notamment son module de contrôle MC1, et le module de contrôle MC2 d'un récepteur R peuvent être réalisés sous la forme de circuits électroniques, de modules logiciels (ou informatiques), ou d'une combinaison de circuits et de logiciels.

On a décrit ci-avant un dispositif de contrôle D et un récepteur radio multifréquences R permettant de mettre en oeuvre l'invention. Mais, cette invention peut être également considérée sous la forme d'un procédé de transmission de données. Celui-ci peut être mis en oeuvre à l'aide du dispositif de contrôle D et des récepteurs radio multifréquences R présentés ci-avant. Les fonctions et sous-fonctions principales et optionnelles assurées par les étapes de ce procédé étant sensiblement identiques à celles assurées par les différents moyens constituant le dispositif D et les récepteurs R, seules seront résumées ci-après les étapes mettant en oeuvre les fonctions principales du procédé selon l'invention.

Ce procédé consiste :
- à subdiviser des groupes de données, à transmettre dans au moins une cellule destinataire Ci, en premier P1i et second P2i sous-groupes,
- à constituer une première suite S1 de premiers sous-groupes P1i et une seconde suite S2 de seconds sous-groupes P2i, et
- à faire transmettre dans chaque cellule destinataire Ci, d'une part, la première suite S1 par le satellite SA, et d'autre part, la seconde suite S2 par chaque station terrestre RE associée à une cellule destinataire Ci, en synchronisant leurs instants d'émission respectifs de sorte que chaque terminal destinataire Tj situé dans une cellule destinataire Ci puisse recevoir chaque premier sous-groupe P1i d'un groupe de données qui lui est destiné pendant une période de temps différente de celle pendant laquelle il doit recevoir le second sous-groupe P2i de ce même groupe.

L'invention ne se limite pas aux modes de réalisation de dispositif de contrôle, de station de contrôle de transmission de données, de récepteur radio multifréquences, de terminal de communication radio, et de procédé de transmission de données décrits ci-avant, seulement à titre d'exemple, mais elle englobe toutes les variantes que pourra envisager l'homme de l'art dans le cadre des revendications ci-après.

## Revendications

1. Procédé de transmission de données dans un réseau de communication comportant au moins un satellite de communication (SA) et des stations terrestres de communication (RE) propres à transmettre par voie d'ondes des données en direction de terminaux de communication radio (Tj) situés dans des cellules radio terrestres (Ci) dudit réseau, **caractérisé en ce qu'**il consiste i) à subdiviser des groupes de données à transmettre dans au moins une cellule dite destinataire (Ci) en premier (P1i) et second (P2i) sous-groupes, ii) à constituer une première suite (S1) de premiers sous-groupes (P1i) et une seconde suite (S2) de seconds sous-groupes (P2i), et iii) à faire transmettre dans chaque cellule destinataire (Ci), d'une part, ladite première suite (S1) par ledit satellite (SA), et d'autre part, ladite seconde suite (S2) par chaque station (RE) associée à une cellule destinataire (Ci), en synchronisant leurs instants d'émission respectifs de sorte que chaque terminal (Tj) situé dans une cellule destinataire (Ci) puisse recevoir chaque premier sous-groupe (P1i) d'un groupe de données qui lui est destiné pendant une période de temps différente de celle pendant laquelle il doit recevoir le second sous-groupe (P2i) de ce même groupe.

2. Procédé selon la revendication 1, **caractérisé en ce que** lesdits instants d'émission sont synchronisés de sorte que chaque terminal (Tj) puisse recevoir les premier (P1i) et second (P2i) sous-groupes, d'un groupe de données qui lui est destiné, espacés d'un écart temporel choisi.

3. Procédé selon l'une des revendications 1 et 2, **caractérisé en ce que** lesdites première (S1) et seconde (S2) suites sont transmises au moyen de première et seconde porteuses de première et seconde fréquences différentes, et **en ce que** chaque terminal (Tj) en attente de premier (P1i) et second (P2i) sous-groupes, d'un groupe de données qui lui est destiné, cale un récepteur radio multifréquences (R) sur ladite première fréquence afin de recevoir ledit premier sous-groupe (P1i), puis, après avoir reçu ledit premier sous-groupe (P1i), cale ledit récepteur (R) sur ladite seconde fréquence afin de recevoir ledit second sous-groupe (P2i).

4. Procédé selon la combinaison des revendications 2 et 3, **caractérisé en ce que** ledit terminal (Tj) cale son récepteur (R), d'une part, sur ladite première fréquence à un premier instant choisi et pendant une première durée choisie correspondant à l'intervalle de temps pendant lequel il doit recevoir ledit premier sous-groupe (P1i) dudit réseau, et d'autre part, sur ladite seconde fréquence à un second instant, choisi égal au premier instant augmenté dudit écart temporel choisi, et pendant une seconde durée choisie correspondant à l'intervalle de temps pendant lequel il doit recevoir ledit second sous-groupe (P2i) dudit réseau.

5. Procédé selon l'une des revendications 1 à 4, **caractérisé en ce que** l'on fait également transmettre une partie au moins de ladite première suite (S1) par chaque station (RE) associée à une cellule destinataire (Ci), en synchronisant les instants d'émission du satellite (SA) et des stations (RE) de sorte que chaque terminal (Tj) situé dans une cellule destinataire (Ci) puisse recevoir chaque premier sous-groupe (P1i) d'un groupe de données qui lui est destiné, via ledit satellite (SA) et via lesdits répéteurs (RE), pendant une période de temps différente de celle pendant laquelle il doit recevoir desdits répéteurs (RE) le second sous-groupe (P2i) de ce même groupe.

6. Dispositif de contrôle (D) pour une station de contrôle de transmission de données (SC) d'un réseau de communication comportant au moins un satellite de communication (SA) et des stations terrestres de communication (RE) propres à transmettre par voie d'ondes des données en direction de terminaux de communication radio (Tj) situés dans des cellules radio terrestres (Ci) dudit réseau, **caractérisé en ce qu'**il comprend des moyens de contrôle (MC1) agencés, en cas de groupes de données à transmettre à des terminaux radio (Tj) situés dans au moins une cellule dite destinataire (Ci), i) pour subdiviser lesdits groupes en premier (P1i) et second (P2i) sous-groupes, ii) pour constituer une première suite (S1) de premiers sous-groupes (P1i) et une seconde suite (S2) de seconds sous-groupes (P2i), iii) pour ordonner la transmission d'une part, de ladite première suite (S1) audit satellite (SA), et d'autre part, de ladite seconde suite (S2) à chaque station terrestre (RE), dite destinataire, associée à une cellule destinataire (Ci), et iv) pour synchroniser les instants d'émission respectifs dudit satellite (SA) et de chaque station terrestre destinataire (RE) de sorte que chacun desdits terminaux radio (Tj) puisse recevoir chaque premier sous-groupe (P1i) d'un groupe de données qui lui est destiné pendant une période de temps différente de celle pendant laquelle il doit recevoir le second sous-groupe (P2i) de ce même groupe.

7. Dispositif selon la revendication 6, **caractérisé en ce que** lesdits moyens de contrôle (MC1) sont agencés pour synchroniser lesdits instants d'émission de sorte que chaque terminal destinataire (Tj) puisse recevoir les premier (P1i) et second (P2i) sous-groupes, d'un groupe de données qui lui est destiné, espacés d'un écart temporel choisi.

8. Dispositif selon l'une des revendications 6 et 7, **caractérisé en ce que** lesdits moyens de contrôle (MC1) sont agencés pour ordonner la transmission desdites première (S1) et seconde (S2) suites au moyen de première et seconde porteuses de fréquences différentes.

9. Dispositif selon l'une des revendications 6 à 8, **caractérisé en ce que** lesdits moyens de contrôle (MC1) sont agencés pour ordonner auxdites stations (RE) associées aux cellules destinataires (Ci) de transmettre une partie au moins de ladite première suite (S1), et pour synchroniser les instants d'émission dudit satellite (SA) et desdites stations (RE) de sorte que chaque terminal (Tj) situé dans une cellule destinataire (Ci) puisse recevoir chaque premier sous-groupe (P1i) d'un groupe de données qui lui est destiné, via ledit satellite (SA) et via lesdits répéteurs (RE), pendant une période de temps différente de celle pendant laquelle il doit recevoir desdits répéteurs (RE) le second sous-groupe (P2i) de ce même groupe.

10. Station de contrôle de transmission de données (SC) pour un réseau de communication comportant au moins un satellite de communication (SA) et des stations terrestres de communication (RE) propres à transmettre par voie d'ondes des données en direction de terminaux de communication radio (Tj) situés dans des cellules radio terrestres (Ci) dudit réseau, **caractérisée en ce qu'**elle comprend un dispositif de contrôle (D) selon l'une des revendications 6 à 9.

11. Récepteur radio multifréquences (R) pour un terminal de communication (Tj) rattaché à un réseau de communication comportant au moins un satellite de communication (SA) et des stations terrestres de communication (RE) propres à transmettre par voie d'ondes des données audit terminal (Tj) lorsqu'il est situé dans une cellule radio terrestre (Ci) dudit réseau, **caractérisé en ce qu'**il est agencé pour recevoir et traiter des première et seconde porteuses présentant respectivement des première et seconde fréquences, et **en ce qu'**il comprend des moyens de contrôle (MC2) agencés, en cas d'attente de première et seconde porteuses comportant des premier (P1i) et second (P2i) sous-groupes d'un groupe de données qui lui est destiné, en provenance dudit satellite (SA) et de la station terrestre (RE) associée à la cellule (Ci) dans laquelle il est situé, pour caler sa fréquence de réception sur ladite première fréquence afin de recevoir la première porteuse comportant ledit premier sous-groupe (P1i), puis, après avoir reçu ledit premier sous-groupe (P1i), pour caler sa fréquence de réception sur ladite seconde fréquence afin de recevoir la seconde porteuse comprenant ledit second sous-groupe (P2i).

12. Récepteur radio selon la revendication 11, **caractérisé en ce que** lesdits moyens de contrôle (MC2) sont agencés pour caler sa fréquence de réception, d'une part, sur ladite première fréquence à un premier instant choisi et pendant une première durée choisie correspondant à l'intervalle de temps pendant lequel il doit recevoir ledit premier sous-groupe (P1i) dudit réseau, et d'autre part, sur ladite seconde fréquence à un second instant, choisi égal au premier instant augmenté dudit écart temporel choisi, et pendant une seconde durée choisie correspondant à l'intervalle de temps pendant lequel il doit recevoir ledit second sous-groupe (P2i) dudit réseau.

13. Terminal de communication radio (Tj) pour un réseau de communication comportant au moins un satellite de communication (SA) et des stations terrestres de communication (RE), **caractérisé en ce qu'**il comprend un récepteur radio multifréquences (R) selon l'une des revendications 11 et 12.

## Claims

1. Method of transmitting data in a communication network including at least one communication satellite (SA) and terrestrial communication stations (RE) adapted to transmit by data radio to radio communication terminals (Tj) situated in terrestrial radio cells (Ci) of said network, **characterized in that** it consists in i) dividing groups of data to be transmitted in at least one destination cell (Ci) into first subgroups (P1i) and second subgroups (P2i),
ii) constituting a first sequence (S1) of first subgroups (P1i) and a second sequence (S2) of second subgroups (P2i), and iii) having transmitted in each destination cell (Ci), on the one hand, the first sequence (S1) by the satellite (SA) and, on the other hand, the second sequence (S2) by each terrestrial station (RE) associated with each destination cell (Ci), synchronizing their respective sending times that each destination terminal (Tj) situated in a destination cell (Ci) can receive each first sub-group (P1i) of a data group that is intended for it during a time period different from that in which it has to receive the second subgroup (P2i) of the same group.

2. Method according to claim 1, **characterized in that** said sending times are synchronized so that each terminal (Tj) can receive the first subgroups (P1i) and the second subgroups (P2i) of a data group that is intended for it spaced by a chosen time difference.

3. Method according to either of claims 1 and 2, **characterized in that** said first sequence (S1) and said second sequence (S2) are transmitted by first and second carriers at different first and second frequencies and **in that** each terminal (Tj) awaiting first subgroups (P1i) and second subgroups (P2i) of a data group that is intended for it locks a multifrequency radio receiver (R) onto said first frequency in order to receive said first subgroup (P1i) and then, after receiving said first subgroup (P1i), locks said receiver (R) onto said second frequency in order to receive said second subgroup (P2i),

4. Method according to the combination of claims 2 and 3, **characterized in that** said terminal (Tj) locks its receiver (R) firstly, to said first frequency at a chosen first time and during a chosen first duration corresponding to the time interval during which it has to receive said first subgroup (P1i) from said network and, secondly, to said second frequency at a second time, made equal to the first time increased by a chosen time difference, and during a chosen second duration corresponding to the time interval during which it has to receive said second subgroup (P2i) from said network.

5. Method according to any one of claims 1 to 4, **characterized in that** at least a portion of said first sequence (S1) is transmitted by each station (RE) associated with a destination cell (Ci), synchronizing the sending times of the satellite (SA) and the stations (RE) so that each terminal (Tj) situated in a destination cell (Ci) can receive each first subgroup (P1i) of a data group that is intended for it via said satellite (SA) and via said repeaters (RE) during a time period different from that in which it has to receive from said repeaters (RE) the second subgroup (P2i) of that same group.

6. Control device (D) for a data transmission control station (SC) of a communication network including at least one communication satellite (SA) and terrestrial communication stations (RE) adapted to transmit data by radio to radio communication terminals (Tj) situated in terrestrial radio cells (Ci) of said network, **characterized in that** it comprises control means (MC1) adapted, in the case of groups of data to be transmitted to radio terminals (Tj) situated in at least one cell called the destination cell (Ci), i) to divide said groups into first subgroups (P1i) and second subgroups (P2i), ii) to constitute a first sequence (S1) of first subgroups (P1i) and a second sequence (S2) of second subgroups (P2i), iii) to instruct the transmission, on the one hand, of said first sequence (S1) to said satellite (SA), and on the other hand, of said second sequence (S2) to each terrestrial station (RE), referred to as the destination station, associated with a destination cell (Ci), and iv) to synchronize the respective sending times of said satellite (SA) and each destination terrestrial station (RE) so that each of said radio terminals (Tj) can receive each first subgroup (P1i) of a data group that is intended for it during a time period different from that in which it has to receive the second subgroup (P2i) of that same group.

7. Device according to claim 6, **characterized in that** said control means (MC1) are adapted to synchronize said sending times so that each destination terminal (Tj) can receive the first subgroups (P1i) and the second subgroups (P2i) of a data group that is intended for it spaced by a chosen time difference.

8. Device according to either of claims 6 and 7, **characterized in that** said control means (MC1) are adapted to instruct the transmission of said first sequence (S1) and said second sequence (S2) by means of first and second carriers at different frequencies.

9. Device according to any one of claims 6 to 8, **characterized in that** said control means (MC1) are adapted to instruct said stations (RE) associated with the destination cells (Ci) to transmit at least a portion of said first sequence (S1) and to synchronize the sending times of said satellite (SA) and said stations (RE) so that each terminal (Tj) situated in a destination cell (Ci) can receive each first subgroup (P1i) of a data group that is intended for it via said satellite (SA) and via said repeaters (RE) during a time period different from that in which it has to receive from said repeaters (RE) the second subgroup (P2i) of that same group.

10. Data transmission control station (SC) for a communication network including at least one communication satellite (SA) and terrestrial communication stations (RE) adapted to transmit data by radio to radio communication terminals (Tj) situated in terrestrial radio cells (Ci) of said network, **characterized in that** it comprises a control device (D) according to any one of claims 6 to 9.

11. Multifrequency radio receiver (R) for a communication terminal (Tj) attached to a communication network including at least one communication satellite (SA) and terrestrial communication stations (RE) adapted to transmit data by radio to said terminal (Tj) when it is situated in a terrestrial radio cell (Ci) of said network, **characterized in that** it is adapted to receive and process first and second carriers at first and second frequencies, respectively, and comprises control means (MC2) adapted, in case of awaiting first and second carriers carrying first subgroups (P1i) and second subgroups (P2i) of a data group that is intended for it, coming from said satellite (SA) and from the terrestrial station (RE) associated with the cell (Ci) in which it is situated, to lock its receive frequency onto said first frequency in order to receive the first carrier carrying said first subgroup (P1i) and then, after deceiving said first subgroup (P1i), to lock its receive frequency onto said second frequency in order to receive the second carrier carrying said second subgroup (P2i).

12. Radio receiver according to claim 11, **characterized in that** said control means (MC2) are adapted to lock its receive frequency, firstly, to said first frequency at a chosen first time and during a chosen first duration corresponding to the time interval during which it has to receive said first subgroup (P1i) from said network and, secondly, to said second frequency at a chosen second time equal to the first time plus said chosen time difference and during a chosen second duration corresponding to the time interval during which it has to receive said second subgroup (P2i) from said network.

13. Radio communication terminal (Tj) for a communication network including at least one communication satellite (SA) and terrestrial communication stations (RE), **characterized in that** it comprises a multifrequency radio receiver (R) according to other of claims 11 and 12.

## Patentansprüche

1. Verfahren zur Übertragung von Daten in einem Kommunikationsnetzwerk, welches mindestens einen Kommunikationssatelliten (SA) und terrestrische Kommunikationsstationen (RE) umfasst, die fähig sind, von Wellenübertragung Daten an Funkkommunikations-Endgeräte (Tj), welche sich in terrestrischen Funkzellen (Ci) des besagten Netzwerks befinden, zu senden, **dadurch gekennzeichnet, dass** es darin besteht i) in mindestens einer sogenannten Empfängerzelle (Ci) zu übertragende Datengruppen in eine erste (P1i) und eine zweite (P2i) Untergruppe zu unterteilen, ii) eine erste Folge (S1) von ersten Untergruppen (P1i) und eine zweite Folge (S2) von zweiten Untergruppen (P2i) zu bilden, und iii) zu bewirken, dass einerseits der besagte Satellit (SA) die besagte erste Folge (S1) in jeder Empfängerzelle (Ci) und andererseits jede einer Empfängerzelle (Ci) zugeordnete Station (RE) die besagte zweite Folge (S2) überträgt, wobei die jeweiligen Sendezeiten derart synchronisiert werden, dass jedes sich in einer Empfangerzelle befindliche Endgerät (Tj) jede erste Untergruppe (P1i) einer Datengruppe, welche an das Endgerät adressiert ist, innerhalb eines Zeitraums empfangen kann, welcher sich von dem Zeitraum, innerhalb welchem es die zweite Untergruppe (P2i) dieser selben Gruppe empfangen soll, unterscheidet.

2. Verfahren nach Anspruch 1, **dadurch gekennzeichnet, dass** die besagten Sendezeiten derart synchronisiert werden, dass jedes Endgerät (Tj) die erste (P1i) und die zweite (P2i) Untergruppe einer an dieses Endgerät adressierten Datengruppe mit einem gewählten zeitlichen Abstand empfangen kann.

3. Verfahren nach einem der Ansprüche 1 und 2, **dadurch gekennzeichnet, dass** die besagte erste (S1) und die besagte zweite (S2) Folge mittels einer ersten und einer zweiten Trägerwelle mit verschiedenen ersten und zweiten Frequenz übertragen werden, und dass jedes Endgerät (Tj), welches die erste (P1i) und die zweite (P2i) Untergruppe einer an dieses Endgerät adressierten Datengruppe erwartet, einen Mehrfachfrequenz-Funkempfänger (R) auf die besagte erste Frequenz einstellt, um die besagte erste Untergruppe (P1i) zu empfangen, und, nachdem es die besagte erste Untergruppe (P1i) empfangen hat, den besagten Empfänger (R) auf die besagte zweite Frequenz einstellt, um die besagte zweite Untergruppe (P21) zu empfangen.

4. Verfahren nach der Kombination der Anspruche 2 und 3, **dadurch gekennzeichnet, dass** das besagte Endgerät (Tj) seinen Empfänger (R) einerseits zu einem gewählten ersten Zeitpunkt undwährend einer gewählten ersten Dauer, welche dem Zeitintervall entspricht, während weichem er die besagte erste Untergruppe (P1i) von dem besagten Netzwerks erhalten soll, auf die besagte erste Frequenz einstellt, und andererseits zu einem zweiten Zeilpunkt, welcher so gewählt ist, dass er dem ersten Zeitpunkt erhöht um den besagten gewählten zeitlichen Abstand entspricht und während einer gewählten zweiten Dauer, welche dem Zeitintervall entspricht, während welchem er die besagte zweite Untergruppe (P21) von dem besagten Netzwerk erhalten soll, einstellt.

5. Verfahren nach einem der Ansprüche 1 bis 4, **dadurch gekennzeichnet, dass** ebenfalls zumindest ein Teil der besagten ersten Folge (S1) von jeder mit einer Empfängerzelle (Ci) assoziierten Station (RE) übertragen wird, indem man die Sendezeiten des Satelliten (SA) und der Stationen (RE) derart synchronisiert, dass jedes sich in einer Empfängerzone (Ci) befindliche Endgerät (Tj) jede erste Untergruppe (P1i) einer an dieses Endgerät adressierten Datengruppe über den besagten Satelliten (SA) und über die besagten Leitungsverstärker (RE) während eines Zeitraums, welcher sich von dem Zeitraum, während welchem es von den besagten Leitungsverstärkern (RE) die zweite Untergruppe (P2i) dieser selben Gruppe erhalten soll, unterscheidet, empfangen kann.

6. Steuervorrichtung (D) für eine Datenübertragungssieuerstation (SC) eines Kommunikationsnetzwerks, welches mindestens einen Kommunikationssatelliten (SA) und terrestrische Kommunikationsstationen (RE) umfasst, welche fähig sind, per Wellenübertragung Daten an Funkkommunikationsendgeräte (Tj), welche sich in terrestrischen Funkzellen (Ci) des besagten Netzwerks befinden, zu senden, **dadurch gekennzeichnet, dass** sie Steuermittel (MC1) umfasst, welche im Fall von an sich in mindestens einer sogenannten Empfängerzelle (Ci) befindliche Funkendgeräte (Tj) zu Übertragende Datengruppenausgestaltet sind, um i) die besagten Gruppen in erste (P1i) und zweite (P2i) Untergruppen zu unterteilen, ii) eine erste Folge (S1) von ersten Untergruppen (P1i) und eine zweite Folge (S2) von zweiten Untergruppen (P2i) zusammenzustellen, iii) einerseits die Übertragung der besagten ersten Folge (S1) an den besagten Satelliten (SA) und andererseits die Übertragung der besagten zweiten Folge (S2) an jede terrestrische sogenannte Empfängerstation (RE), welche mit einer Empfängerzelle (Ci) assoziiert ist, zu befehlen, und iv) die jeweiligen Sendezeiten des besagten Satelliten (SA) und einer jeden terrestrischen Empfägerstation (RE) derart zu synchronisieren, dass ein jedes der besagten Funkendgeräte (Tj) jede erste Untergruppe (P1i) einer Datengruppe, welche an dieses Endgerät adressiert ist, während eines Zeitraums empfangen kann, welcher sich von dem Zeitraum, während welchem es die zweite Untergruppe (P2i) dieser selben Gruppe empfangen soll, unterscheidet.

7. Vorrichtung nach Anspruch 6, **dadurch gekennzeichnet, dass** die besagten Steuermittel (MC1) ausgestalten sind, um die besagten Sendezeiten derart zu synchronisieren, dass jedes Emprängerendgerat (Tj) die erste (P1i) und die zweite (P2i) Untergruppe einer an dieses Endgerät adressierten Datengruppe mit einem gewählten zeiflichen Abstand empfangen kann.

8. Vorrichtung nach einem der Ansprüche 6 und 7, **dadurch gekennzeichnet, dass** die besagten Steuermittel (MG1) ausgestaltet sind, um die Übertragung der besagten ersten (S1) und der besagten zweiten (S2) Folge mittels der ersten und der zweiten Trägerwelle mit unterschiedlichen Frequenzen zu befehlen.

9. Vorrichtung nach einem der Ansprüche 6 bis 8, **dadurch gekennzeichnet, dass** die besagten Steuermittel (MC1) ausgestaltet sind, um den besagten mit den Empfängerzellen(Ci) assoziierten Stationen (RE) zu befehlen, zumindest einen Teil der besagten ersten Folge (S1) zu übertragen, und um die Sendezeiten des besagten Satelliten (SA) und der besagten Station (RE) so zu synchronisieren, dass jedes sich in einer Empfängerzelle (C) befindliche Endgerät (Tj) jede erste Untergruppe (P1i) einer an dieses Endgerät adressierten Datengruppe über den besagten Satelliten (SA) und über die besagten Leitungsverstärker (RE) während eines Zeitraums empfangen kann, der sich von dem zeitraum, während welchem es von den besagten Leitungsverstärkern (RE) die zweite Untergruppe (P2i) dieser selben Gruppe empfangen soll, unterscheidet.

10. Datenübertragungssteuerstation (SC) für ein Kommunikationsnetzwerk, welches mindestens einen Kommunikationssatelliten (SA) und terrestrische Kommunikationsstationen (RE) umfasst, welche fähig sind, per Wellenübertragung Daten an Funkkommunikationsendgeräte (Tj), welche sich in terrestrischen Funkzellen (Ci) des besagten Netzwerks befinden, zu senden, **dadurch gekennzeichnet, dass** sie eine Steuervorrichtung (D) nach einem der Ansprüche 6 bis 9 umfasst.

11. Multifrequenz-Funkempfänger (R) für ein Kommunikationsendgerät (Tj), das an ein Kommunikationsnetz angeschlossen ist, welches mindestens einen Kommunikationssatelltten (SA) und terrestrische Kommunikationsstationen (RE) umfasst, die fähig sind, per Wellenübertragung Daten an das besagte Endgerät (Tj) zu senden, wenn dieses sich in einer terrestrischen Funkzelle(Ci) des besagten Netzwerks (C) befindet, **dadurch gekennzeichnet, dass** er ausgestattet ist, um erste und zweite Trägerwellen,welche jeweils erste und zweite Frequenzen aufweisen, zu empfangen und zu verarbeiten, und dass er Steuermittel (MC2) umfasst, welche ausgestaltet zum im Fall des Erwartens der ersten und der zweiten Trägerwellen, welche die ersten (P1i) und zweiten (P2i) Untergruppen einer an das Endgerät adressierten Datengruppe von dem besagten Satelliten (SA) und von der mit der Zelle (Ci), in welcher er sich befindet, assoziierten terrestrischen Station (RE) enthalten, seine Empfangsfrequenz auf die besagte erste Frequenz einzustellen, um die erste Trägerwelle, welche die besagte erste Untergruppe (P1i) enthält, zu empfangen, und, nachdem er die besagte erste Untergruppe (P1i) empfangen hat, seine Empfangsfrequenz auf die besagte zweite Frequenz einzustellen, um die zweite Trägerwelle, welche die besagte zweite Untergruppe (P2i) enthält, zu empfangen.

12. Funkempfänger nach Anspruch 11, **dadurch gekennzeichnet, dass** die besagten steuermittel (MC2) ausgestaltet sind, um seine Empfangsfrequenz einerseits auf die besagte erste Frequenz zu einem ersten gewählten Zeitpunkt und während einer ersten gewählten Dauer, welche dem Zeitintervall, während welchem er die besagte erste Untergruppe (P1i) von dem besagten Netzwerk empfangen soll, entspricht, und andererseits auf die besagte zweite Frequenz zu einem zweiten Zeitpunkt, welcher so gewählt wird, dass er gleich dem ersten Zeitpunkt erhöht um den besagten gewählten zeitlichen Abstand ist, und während einer zweiten gewählten Dauer, welche dem Zeitintervall, während welchem er die besagte zweite Untergruppe (P2i) vom besagten Netzwerk empfangen soll, entspricht, einzustellen.

13. Funkkommunikations-Endgerät (Tj) für ein Kommunikationsnetzwerk, welches mindestens einen Kommunikationssatelliten (SA) und terrestrische Kommunikationsstationen (RE) umfasst **dadurch gekennzeichnet, dass** es einen Mehrfrequenz-Funkempfänger (R) nach einem der Anspruche 11 und 12 enthält.
